# EUROPEAN PATENT SPECIFICATION

(11) **EP 0 955 760 B1**
(45) Date of publication and mention of the grant of the patent: **21.09.2005**
(21) Application number: 99302397.7
(22) Date of filing: 29.03.1999
(51) Int. Cl.: H04L 29/12, H04L 12/24

(54) **Apparatus and method for preventing duplicate IP address setting**
Vorrichtung und Verfahren zur Verhinderung von Doppelzuweisung einer IP Adresse
Appareil et procédé pour éviter la double assignation d'une adresse IP

(30) Priority: 31.03.1998 JP 8712998
(43) Date of publication of application: 10.11.1999
(73) Proprietor: CANON KABUSHIKI KAISHA, Tokyo (JP)
(72) Inventor: Kawashima, Masanori, Ohta-ku, Tokyo (JP)
(74) Representative: Beresford, Keith Denis Lewis

(56) References cited:
- US-A- 5 724 510
- BRUNO L: "IP addressing tools: containing the chaos" DATA COMMUNICATIONS INTERNATIONAL, vol. 25, no. 12, September 1996 (1996-09), pages 71-74, 76, XP002096982 USA ISSN: 0363-6399
- BRUNO L: "MINDING IP ADDRESSES" DATA COMMUNICATIONS, vol. 26, no. 1, 1 January 1997 (1997-01-01), page 118, 120 XP000659589 ISSN: 0363-6399

## Description

### BACKGROUND OF THE INVENTION

The present invention relates to network device control apparatus and method and storage medium for monitoring and controlling various network devices connected to a network.

Computers can be interconnected via a local area network (LAN). A local area network spreads on a floor of a building or all over the building, through a group of buildings (private branch), a local area, further, LANs may be interconnected into a larger area network such as a global system as a largest sized network. A LAN may have various hardware interconnection techniques and a plurality of network protocols. A simple LAN separated from other networks can be managed by respective users, who can change devices, install software, and diagnose problems.

On the other hand, in a large-scale complicated LAN or a large LAN group of interconnected networks require "management" by a human network administrator and by software used by the network administrator. In the present application, "management" means management by software for managing an entire system, and "user" means a person who uses the network management software. Generally, the user is a person in charge of system management. The user obtains management data and changes the data on the network by using the network management software.

A large-scale network system is a dynamic system where usually addition/removal of devices, update of software and detection of problems must be continuously performed. Generally, various systems provided from various manufacturers are known.

Hereinbelow, an example of management and control of network devices in the large-scale network will be described.

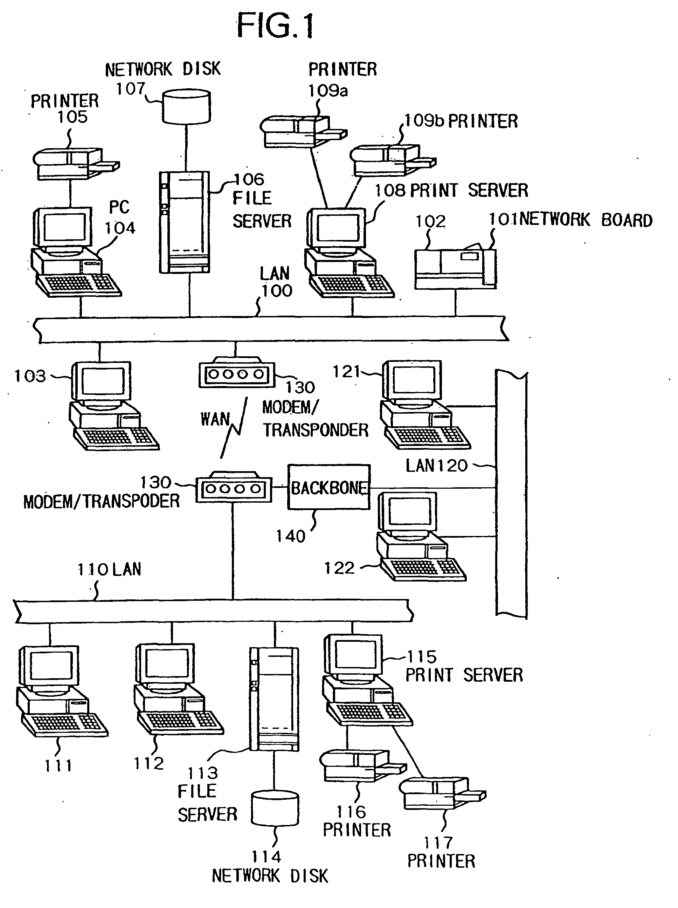

Fig. 1 shows an example where a network board (NB) 101, which connects a printer to a network, is connected to a printer 102 having an open-type architecture. The NB 101 is connected to a local area network (LAN) 100 via a LAN interface such as Ethernet interface 10 Base-2 having a coaxial connector or 10 Base-T having RJ-45.

A plurality of personal computers (PC) such as a PC 103 and PC 104 are also connected to the LAN 100. These PCs communicate with the NB 101 under the control of a network operating system. One of the PCs, e.g., the PC 103 may be designated as a network management unit. Further, a printer such as a printer 105 connected to the PC 104 may be connected to the PC 103.

Further, a file server 106 is connected to the LAN 100. The file server 106 is used for management of access to files stored in a large-capacity (e.g. 10 gigabytes) network disk 107. A print server 108 causes connected printers 109a and 109b or a remote printer such as the printer 105 to perform printing. Further, other peripheral devices (not shown) may be connected to the LAN 100.

More specifically, in the network shown in Fig. 1, network software such as Novell or UNIX software can be used for efficient communication among various network members. A number of such network software can be used, however, as an example, NetWare (trademark by Novell, Inc.; for more details, see on-line documentation in a NetWare package purchasable from Novell, Inc.) software is used here.

Briefly, the file server 106 performs data file reception, storage, queueing, cacheing and transmission, among the LAN members, as a file management unit. For example, data files generated by the PC 103 and the PC 104 are sent to the file server 106. The file server 106 arranges these data files in order, and transmits the arranged data files to the printer 109a in accordance with a command from the print server 108.

The PCs 103 and 104 respectively comprise a general PC which generates a data file, transmits the generated data file to the LAN 100, or receives a file from the LAN 100, further, displays and/or processes the file. Fig. 1 shows personal computers, however, any other computer device appropriate for execution of network software may be included. For example, in use of UNIX software, UNIX workstations may be included in the network. These workstations can be used with the PCs shown in Fig. 1 in appropriate circumstances.

Generally, a LAN such as the LAN 100 provides services to a comparatively local user group such as user group on one floor or continuous floors within one building. Further, a wide area network (WAN) may be constructed when some users are distant from other users and located in, e.g., some users in another building or in another area. Basically the WAN is a collective body formed by connecting a plurality of LANs via a high-speed digital line such as high-speed integrated services of digital network (ISDN) telephone line. Accordingly, as shown in Fig. 1, the LAN 100, a LAN 110 and a LAN 120 are connected via a modulation/demodulation (MODEM)/transponder 130 and a backbone 140 into a WAN. The connection is simple electrical connection using several buses. The LANs respectively include dedicated PCs, and not necessarily, but usually, include a file server and a print server.

Accordingly, as shown in Fig. 1, the LAN 110 includes PCs 111 and 112, a file server 113, a network disk 114, a print server 115, and printers 116 and 117. The LAN 120 includes only PCs 121 and 122. The devices connected to the LANs 100, 110 and 120 can access functions of other devices connected to other LANs via the WAN connection.

To manage devices on a large-scale network system as described above, several management systems have been attempted by various standardization organizations. The International Organization for Standardization (ISO) has proposed a general reference frame work called Open System Interconnect (OSI) model. An OSI model of network management protocol is called Common Management Information Protocol (CMIP). The CMIP is a European common network management protocol.

In the United States, as a network management protocol with higher interconnectivity, provided is a sort of CMIP-related protocol called Simple Network Management Protocol (SNMP) (See M.T. Rose/Translated by Takeshi Nishida, "Introduction to TCP/IP Network Management: For Practical Management" ((K.K.) Toppan, August 20, 1992 (1st edition)). According to the SNMP network management technique, a network management system includes at least one network management station (NMS), several management object nodes each including an agent, and a network management protocol used by the management station and the agents for exchanging management information. A user obtains data and changes the data on the network by communicating with the agent software on a management object node by using network management software on the NMS.

The agent means software which runs as a background process for each target device. When the user requires management data of a device on the network, the management software inserts object identification information into a management packet or frame and sends it to a target agent. The agent interprets the object identification information, then reads data corresponding to the object identification information, and inserts the data into the packet and sends it to the user. Occasionally, a corresponding process is called to read the data.

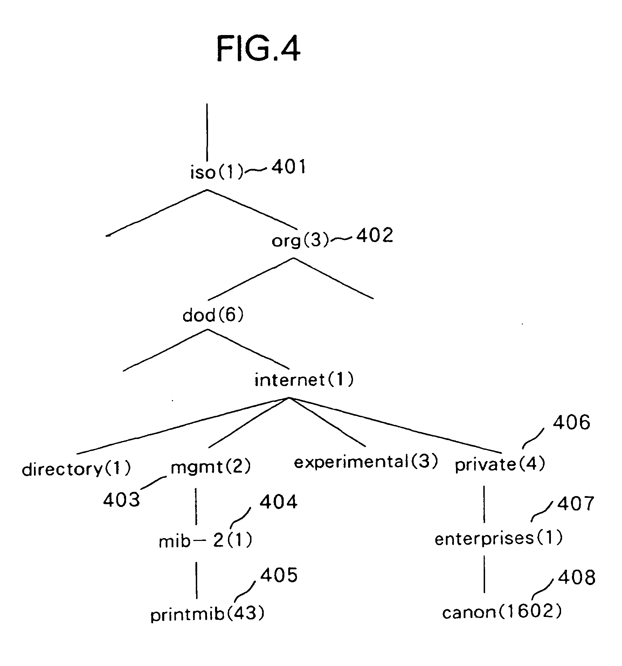

The agent records data of its own state in a data base. This data base is called Management Information Base (MIB). Fig. 4 is a conceptional diagram showing the structure of the MIB. As shown in Fig. 4, the MIB has a tree data structure where the nodes are uniquely numbered. In Fig. 4, bracketed numerals denote node identifiers.

For example, a node 401 has an identifier "1". As a node 402 has an identifier "3" below the node 401, the identifier is represented as "1.3". Similarly, the identifier of a node 403 is represented as "1.3.6.1.2".

The node identifier is called Object Identifier.

This MIB structure is called Structure of Management Information (SMI) and defined in the RFC1155 Structure and Identification of Management Information for TCP/IP-based Internets.

Fig. 4 shows only a part of MIB defined as a standard base.

Reference numeral 404 denotes a node as a top of group of objects called standard MIB generally installed in devices managed by the SNMP. Detailed structure of objects below this node is defined in the RFC1213 Management Information Base for Network Management of TCP/IP-based Internets: MIB-II.

Numeral 405 denotes a node as a top of group of objects called printer MIB generally installed in printers managed by the SNMP. Detailed structure of the objects below this node is defined in the RFC1759 Printer MIB.

Further, numeral 406 denotes a node as a top node called a private MIB used by a firm or party to make its own MIB definition. Numeral 407 denotes a node as a top node called an enterprise extended MIB used by a firm to make its own extension in the private MIB. Canon Kabushiki Kaisha is allotted an enterprise number "1602" for own definition, and a top node 408 to define Canon MIB as Canon's own MIB is located below the node 407 meaning an enterprise. The object identifier of the top node of the Canon MIB is "1.3.6.1.4.1.1602".

As an example of agent installation, an agent may be installed on a network board which connects a printer to a network. In this example, the printer can be an object of management by the network management software.

The user can obtain information on the printer as a control object and change the state of the printer by using the network management software. For example, the user can obtain a character string displayed on a liquid-crystal display of the printer, or change a default paper cassette.

Hereinbelow, an example where the network board (NB) holding an agent is connected to a printer will be described.

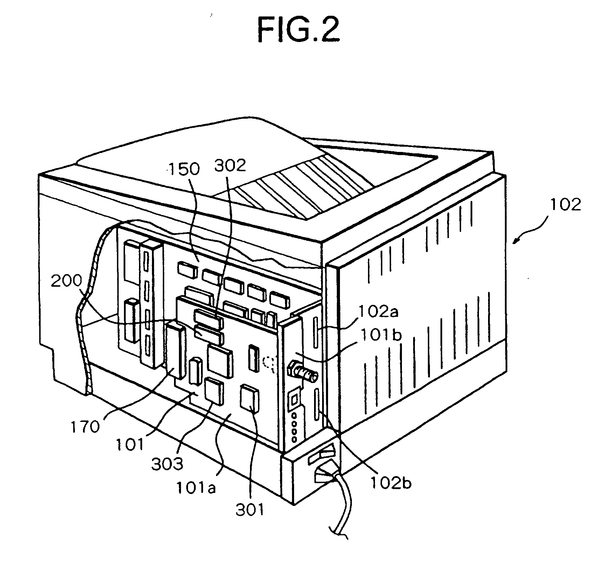

As shown in Fig. 2, preferably, the NB 101 is included in an internal extended I/O slot of the printer 102, as an "embedded" network node having functions of data storage and processing described below.

The construction of the NB 101 realizes distinctive auxiliary functions for control and management of a large multi-area WAN network. These auxiliary functions enable, e.g., control or state monitoring of the printer from a remote place (e.g., the office of the network administrator) on the network, automatic management of printer construction after each printing job so as to provide guaranteed initial environment for the next user, and access via the network so as to distinguish the amount of load on the printer or to schedule toner cartridge exchange. Further, reference to a printer log or statistics of use is possible.

The significant factor in NB designing is a function to access a control state of the printer from the NB 101 via a bi-directional interface such as a common memory 200. Further, an interface such as SCSI interface other than the common memory can be used. In this arrangement, printer operation information can be transmitted to the NB 101 or an external network node for programming of a number of useful auxiliary functions. A block of print image data and control information is constructed by a microprocessor 301 on the NB 101, then described in the common memory 200, and read by the printer 102. Similarly, printer state information is sent from the printer 102 to the common memory 200, and read from the memory by the microprocessor 301 on the NB 101.

Fig. 2 is a partially cutaway perspective view where the NB 101 is installed in the printer 102. As shown in Fig. 2, the NB 101 comprises a printed circuit board 101a holding a face plate 101b for network connection. The NB 101 is connected to a printer interface card 150 via a connector 170. The printer interface card 150 directly controls the printer engine of the printer 102. Print data and printer state command are inputted from the NB 101 via the connector 170 into the printer interface card 150. Further, the printer state information is obtained from the printer interface card 150 via the connector 170. The NB 101 communicates the information via the network connector of the face plate 101b on the LAN 100. At the same time, the printer 102 can receive the print data from conventional serial port 102a and parallel port 102b.

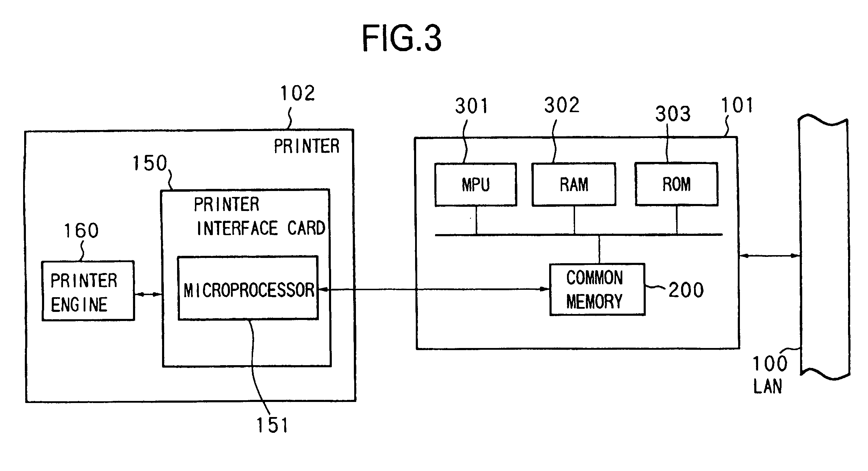

Fig. 3 is a block diagram showing electrical connection among the NB 101, the printer 102 and the LAN 100. The NB 101 is connected to the LAN 100 via the LAN interface, and to the printer 102 via the printer interface card 150. The NB 101 has a microprocessor 301 for controlling the NB 101, a ROM 303 for storing an operation program of the microprocessor 301, a RAM 302 used as a work area for the microprocessor 301 to execute the program, and the common memory 200 for interactive data transmission between the NB 101 and the printer interface card 150. These elements are interconnected through an internal bus. A program for the NB 101 to operate as an SNMP agent is stored in the ROM 303. The microprocessor 301 operates in accordance with the program stored in the ROM 303, and uses the RAM 302 as a work area. Further, the microprocessor 301 uses the common memory 200 as a buffer area for interactive communication with the printer interface card 150.

A microprocessor 151 on the printer interface card 150 performs data access with respect to the NB 101 via the common memory 200 on the NB 101. The microprocessor 151 on the printer interface card 150 also performs communication with a printer engine 160 which actually operates the printing mechanism.

Next, the PC side where the network management software operates will be described below.

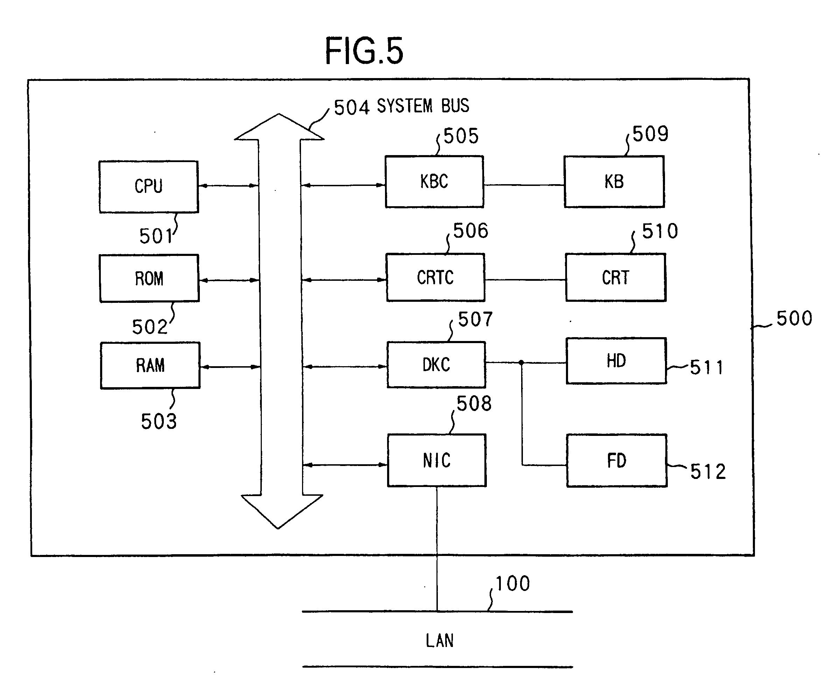

Fig. 5 is a block diagram showing the construction of the PC on which the network management software operates. In Fig. 5, numeral 500 denotes a PC on which the network management software operates, similar to the PC 103 in Fig. 1. The PC 500 has a CPU 501 which executes a network management program, stored in a ROM 502 or a hard disk (HD) 511 or supplied from a floppy disk drive (HD) 512, and controls respective devices connected to a system bus 504.

Numeral 503 denotes a RAM which functions as a main memory of the CPU 501, a work area and the like; 505, a keyboard controller (KBC) which controls instruction input from a keyboard (KB) 509, a pointing device (not shown) and the like; 506, a CRT controller (CRTC) which controls display on a CRT display (CRT) 510; 507, a disk controller (DKC) which controls access to the hard disk (HD) 511 where a boot program, various application programs, a editing file, a user file, the network management program and the like are stored, and access to the floppy disk drive (FD) 512; and 508, a network interface card (NIC) for bi-directional data transmission with the agent or network devices via the LAN 100.

Programs are stored in the hard disk (HD) 511. In the following description, the CPU 501 mainly executes the programs unless any specific device is defined as a main hardware body to execute the program. On the other hand, the network management software stored in the hard disk (HD) 511 mainly performs control. The OS is preferably Windows 95 (by Microsoft Corporation), however, it is not limited to this OS.

The network management program may be stored in a storage medium such as a floppy disk or a CD-ROM and supplied from the storage medium. In such case, the program is read from the storage medium by the floppy disk drive (FD) 512 in Fig. 5 or a CD-ROM drive (not shown), and installed into the hard disk (HD) 511.

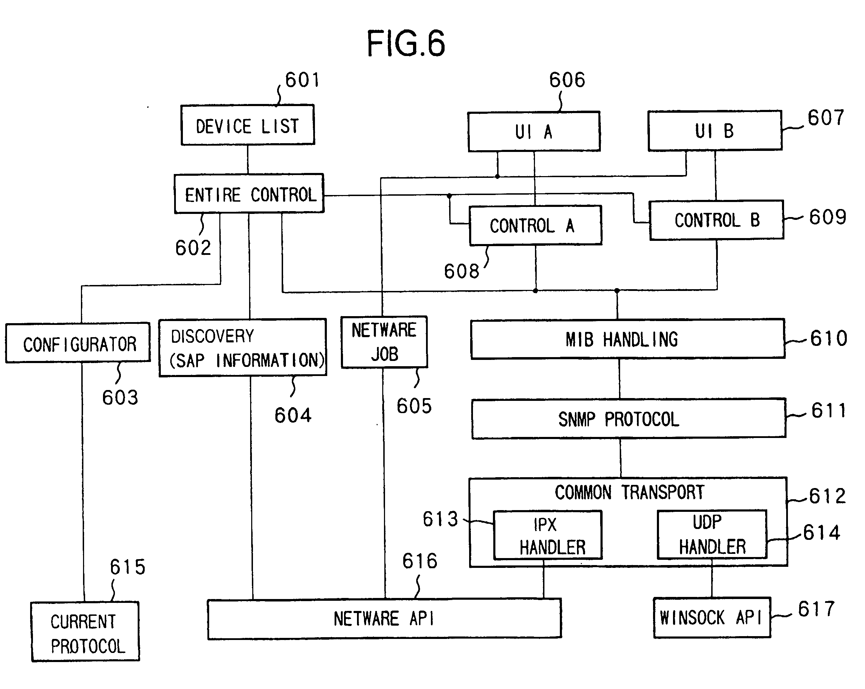

Fig. 6 is a block diagram showing the module construction of the network management software.

The network management software is stored in the hard disk 511 in Fig. 5, and executed by the CPU 501. At this time, the CPU 501 uses the RAM 503 as a work area.

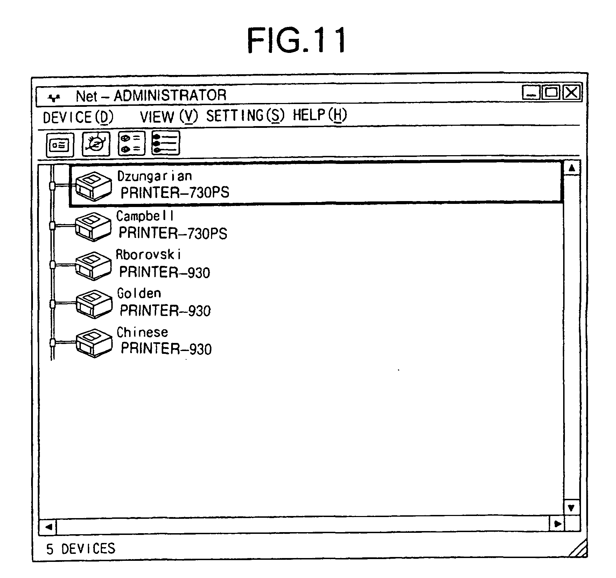

In Fig. 6, numeral 601 denotes a device list module which displays devices connected to the network. Fig. 11 shows an example of a window where a list of devices is displayed by the device list module (device list display window). Numeral 602 denotes an entire control module which controls other modules based on an instruction from the device list; 603, a configurator which performs specific processing regarding network setting of the agent; 604, a discovery module which searches for devices connected to the network. The devices detected by the discovery module 604 are displayed in a list by the device list module 601. Numeral 605 denotes a NetWare job module which obtains print job status from the network server by using NetWare API 616 (Note that for more information on the NetWare API, see "NetWare Programmer's Guide for C" published by Novell, Inc., or the like). Numerals 606 and 607 denote UI modules which display detailed information on the devices. UI modules are provided for respective device models as objects of detailed-information display. Numerals 608 and 609 denote control modules which perform particular control on device models from which detailed information is obtained. Similarly, control modules are provided for respective device models as objects of detailed-information display. A control A module 608 and a control B module 609 obtain MIB data from management object devices by using an MIB module 610, and perform conversion on the data in accordance with necessity, and forward the data to the corresponding UI A module 606 or the UI B module 607.

The MIB module 610 performs conversion between an object identifier and an object key. The object key means a 32-bit integer one-to-one corresponding to an object identifier. The object identifier is a variable length identifier. As the object identifier cannot be easily handled upon installation of the network management software, a fixed length identifier one-to-one corresponding to the object identifier is internally used by the network management software of the present invention. A module higher than the MIB module 610 handles the MIB information by using the object key. Thus, installation of the network management software can be facilitated.

Numeral 611 denotes an SNMP module which performs SNMP packet transmission/reception.

Numeral 612 denotes a common transport module which absorbs the difference between lower protocols to convey SNMP data. Actually, the common transport module 612 performs data transfer by any of IPX handler 613 and UDP handler 614 by a protocol selected by the user upon operation. Note that WinSock 617 (As for WinSock, see the specification of Windows Socket API v1.1. This document is available from a plurality of places. For example, the specification is included in the package of compiler by Microsoft Corporation, Microsoft Visual C/C++) is installed as the UDP handler.

A current protocol 615 used by the configurator 603 is any of IPX protocol or UDP protocol selected by the user upon operation.

For example, in Fig. 1, the network management software generally operates on the personal computers (PC) 103 and 104 connected to the local area network (LAN) 100, searches for network devices connected to the LAN 100 via the network board (NB) 101, and obtains necessary information (e.g., IP addresses and device names) from the detected network devices.

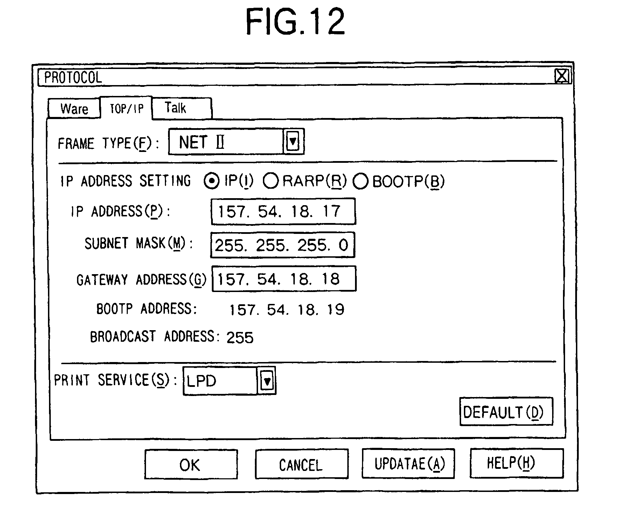

Further, generally, the network management software can set IP address of a detected network device and that of undetected (initial setting is not made) network device. In the former case, the IP address is set in a protocol setting dialog box provided by the UI A module 606 (Fig. 6) or the UI B module 607 (Fig. 6). In the latter case, the IP address is set by the configurator 603 for initial setting of the network board. As an example of IP address setting window, Fig. 12 shows a dialog box for protocol setting.

Fig. 12 shows an example of a window for TCP/IP information setting where the protocol setting dialog box is displayed. In this figure, in [Frame Type (F)], the user selects a frame type used in the TCP/IP. The selection candidates are "Invalid" and "ETHERNET II". In [IP Address Setting], the user selects an IP address setting method used in the TCP/IP. The selection candidates are "IP (I)", "RARP (R)", and "BOOTP (B)". In [IP Address (P)], the user inputs a decimal number (0 to 255) × 4 IP address used in the TCP/IP. Generally, the user inputs an arbitrary IP address from 0.0.0.0 to 255.255.255.255. Only if "IP (I)" is selected in the [IP Address Setting], the IP address input is validated. In [Subnet Mask (M)], the user inputs a decimal number (0 to 255) × 4 IP subnet mask used in the TCP/IP. Only if "IP (I)" or "RARP (R)" but "BOOTP (B)" is selected in the [IP Address Setting], the IP subnet mask input is validated. In [Gateway Address (G)], the user inputs a decimal number (0 to 255) × 4 gateway address used in the TCP/IP. Only if "IP (I)" or "RARP (R)" but "BOOTP (B)" is selected in the [IP Address Setting], the gateway address input is validated. In [BOOTP Address], a decimal number (0 to 255) × 4 BOOTP address used in the TCP/IP is displayed. Only if "BOOTP (B)" is selected in the [IP Address Setting], the BOOTP address input is validated. In [Broadcast Address], a decimal number (0 to 255) × 4 broadcast address used in the TCP/IP is displayed. In [Print Service (S)], the user selects a print service used in the TCP/IP. The selection candidates are "None" and "LPD". A [Default (D)] key is used for resetting the above settings to factory default values. A [OK] key is used for validating the settings and closing the dialog box. When the settings have been changed, the settings of the network interface board are updated. A [Cancel] key is used for invalidating the settings and closing the dialog box. An [Update (A)] key is used for updating the settings of the network interface board when the settings have been changed. Only if the settings have been changed, the setting change is validated. A [Help (H)] key is used for displaying on-line help.

In the dialog box in Fig. 12, if the user changes any of the settings and depresses the [Update (A)] key, the protocol settings of the network interface board is changed, and the next operation is waited in the dialog box in Fig. 12. If the user depresses the [Cancel] key, the dialog box in Fig. 12 is closed without any operation.

However, in the above-described conventional network management software, when IP address is set in a network device, as the user can input arbitrary value from 0.0.0.0 to 255.255.255.255 as the [IP address], the set IP address may be the same as an already-set IP address in another network device. In such case, after the IP address has been set, communication cannot be normally made with the network device

It is known from DATA COMMUNICATIONS, vol. 25, no. 12, September 1996, pages 71-74 and 76, BRUNO L: "IP addressing tools: containing the chaos", XP002096982 to provide an IP addressing tool for use by network managers in assigning IP addresses to PC's, workstations and printers. The tool runs on a network server and automatically issues IP addresses and verifies addresses using a ping utility to keep two devices or users from being assigned the same network ID.

It is also known from DATA COMMUNICATIONS, vol. 26, no.1, 1 January 1997, pages 118 and 120, BRUNO L: "Minding IP addresses", XP000659589 to provide a tool for automatically issuing IP addresses in TCP/IP nets and for updating a database whenever a new address is issued. This allows Net managers to check IP address conflicts.

US-A-5,724,510 describes a method of detecting duplicate IP addresses on a LAN using a series of network broadcasts chosen to elicit responses from nodes on the network.

Accordingly, a first concern of the present invention is to prevent communication failure due to IP address setting error by performing processing to inhibit IP address setting if an IP address to be set in a network device is already set in another network device.

A second concern of the present invention is to prevent communication failure due to IP address setting error, if an IP address to be set in a network device is already set in another network device, by notifying a user that the IP address is already set in the other network device, and to even allow setting of the IP address temporarily in e.g. IP address renumbering.

Aspects of the present invention are set out in the appended claims.

Other features and advantages of the present invention will be apparent from the following description taken in conjunction with the accompanying drawings, in which like reference characters designate the same name or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a diagram showing the example where the network board, which connects a printer to a network, is connected to the printer having an open-type architecture;
Fig. 2 is a partially cutaway perspective view where the network board is installed in the printer;
Fig. 3 is a block diagram showing electrical connection among the network board, the printer and the LAN;
Fig. 4 is a conceptional diagram showing the structure of the MIB;
Fig. 5 is a block diagram showing the construction of the PC on which the network management software operates;
Fig. 6 is a block diagram showing the module construction of the network management software;
Fig. 7 is a flowchart showing a processing procedure from detection of network device to acquisition of IP address of the network device;
Fig. 8 is a flowchart showing a first IP-address setting processing according to an embodiment of the present invention;
Fig. 9 is a flowchart showing a second IP-address setting processing according to the embodiment;
Fig. 10 is a table showing a memory map of a storage medium in which the network management software of the present invention is stored;
Fig. 11 is an example of a device-list display window; and
Fig. 12 is an example of protocol-setting dialog box.

### DETAILED DESCRIPTION OF THE PREFERRED EMBODIMENT

A preferred embodiment of the present invention will now be described in detail in accordance with the accompanying drawings.

Hereinbelow, the operation of IP address setting in the network management software (hereinafter referred to as "NetSpot") according to an embodiment of the present invention will be described. The network management program may be supplied from a storage medium such as a floppy disk or CD-ROM. In such case, as shown in Fig. 5, the program is read from the storage medium by the floppy disk drive (FD) 512 or a CD-ROM drive (not shown), and installed into the hard disk (HD) 511.

Note that all through the following description, the CPU 501 (Fig. 5) mainly executes the program unless another specific device is defined as a main hardware body to execute the program, on the other hand, the NetSpot installed in the hard disk (HD) 511 mainly performs control.

Further, the combination of the network board (NB) 101, connected to the network, and the printer 102, where the network board is installed, is defined as a network device. A network device as an object of control may include a printer.

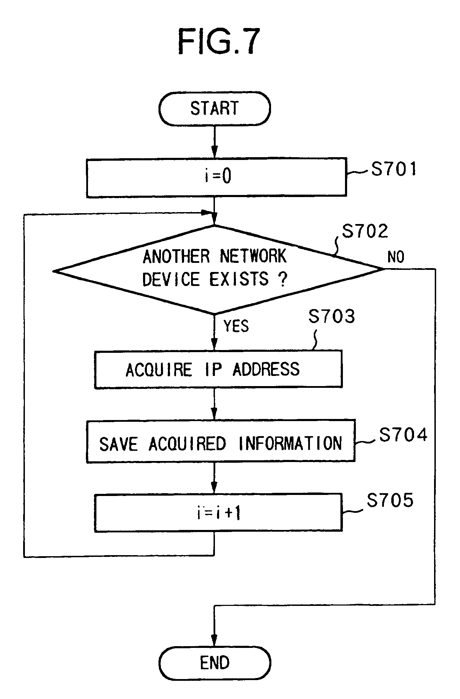

Fig. 7 is a flowchart showing a processing procedure from detection of network device to acquisition of IP address of the network, by the NetSpot, in management of the network device (101, 102) connected to the LAN 100 in Fig. 1 by the personal computer (103, 104 or the like).

In Fig. 7, at step S701, a variable i as a count value of the number of detected network devices is initialized to "0", and the process proceeds to step S702.

At step S702, the network is searched to find a device connected to the network. If a network device is detected (YES at step S702), the process proceeds to step S703, while if no device is detected, (NO at step S702), the process ends. Note that one example of procedure of network device search will be described later. Further, the personal computer on which the NetSpot operates is regarded as a network device.

At step S703, an IP address of the network device detected at step S702 is acquired, and the process proceeds to step S704. The IP address can be acquired by using, .e.g., the SNMP protocol. Note that at the network device detection step 702, if the IP address of the network device can be discriminated, the IP address acquisition step 703 can be omitted.

At step S704, the IP address acquired at step S703 is stored in the RAM in the format that can be referred to by the value of the variable i, and the process proceeds to step S705. At step S705, the variable i is incremented by one, and the process returns to step S702.

As one example of device search at step 702, search in a case where the TCP/IP is used as a network protocol will be described.

If the IP address of a network device as an object of search is designated, the network device is inquired of information necessarily supported by the device. This information is stored in the MIB of each network device. Only the agent of a device having the designated IP address responds to the query. If there is no device having the designated IP address, a time-out error occurs with respect to the query, and the information cannot be obtained. If the IP address of the network device as the search object is not designated, search is performed with a broadcast address. In this case, a request for information necessarily supported by the network device is broadcasted on the network. A network device with the inquired information, on the network, returns the information to the broadcasted request. The other network devices respond to notify that they do not have the inquired information. The network devices that have responded to notify that they do not have the inquired information may be a management problem, in dependence on the installed management software.

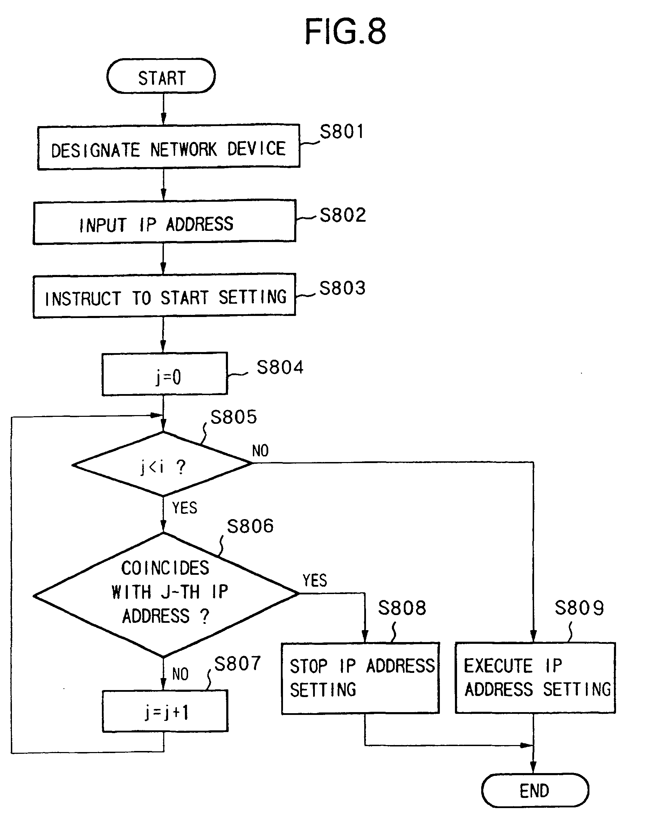

Fig. 8 is a flowchart showing a first IP-address setting processing in a case where the NetSpot sets an IP address of the network device (101, 102) connected to the LAN 100 in Fig. 1 when the network device is managed by the personal computer (103, 104 or the like).

In Fig. 8, at step S801, a network device where the IP address is set is designated, and the process proceeds to step S802. The network designated here is that detected in Fig. 7, or may be a device not detected in Fig. 7 (e.g., a network device in initial state where a network protocol is not set). In the former case, generally, a list of devices is displayed as in the device list display window as shown in Fig. 11, and one of the network devices is selected. In the latter case, generally, designation of network device is made by directly designating a MAC address of the network board by using the configurator 603 (Fig. 6).

At step S802, an IP address set in the network device designated at step S801 is inputted, and the process proceeds to step S803. The input of IP address is made by using, e.g., a protocol setting dialog box as shown in Fig. 12 or a UI provided by the configurator 603 (Fig. 6).

At step S803, instruction is made to start processing to set the IP address, inputted at step S802, in the network device designated at step S801, and the process proceeds to step S804. The instruction to start the processing is made by, e.g., depressing the [OK] key or [Update (A)] key in the protocol setting dialog box.

Also at step S803, implementing the flowchart of Figure 7 for the first time may enable to collect the IP address of the network device.

At step S804, a variable j is initialized to "0", and the process proceeds to step S805.

At step S805, the value of the variable j is compared with the value of the variable i (indicative of the number of network devices) in the flowchart in Fig. 7, and if the value of the variable j is less than that of the variable i (YES at step S805), the process proceeds to step S806, otherwise (NO at step S805), the process proceeds to step S809. At step S806, the j-th IP address is obtained from the IP addresses of the network devices held at step S704, and the j-th IP address is compared with the IP address inputted at step S801. If the two addresses equal each other (YES at step S806), the process proceeds to step S808, while if they are not equal (NO at step S806), proceeds to step S807.

At step S807, the value of the variable j is incremented by one, and the process returns to step S805.

At step S808, the IP address setting is stopped, and the process ends.

At step S809, the IP address setting is executed, and the process ends.

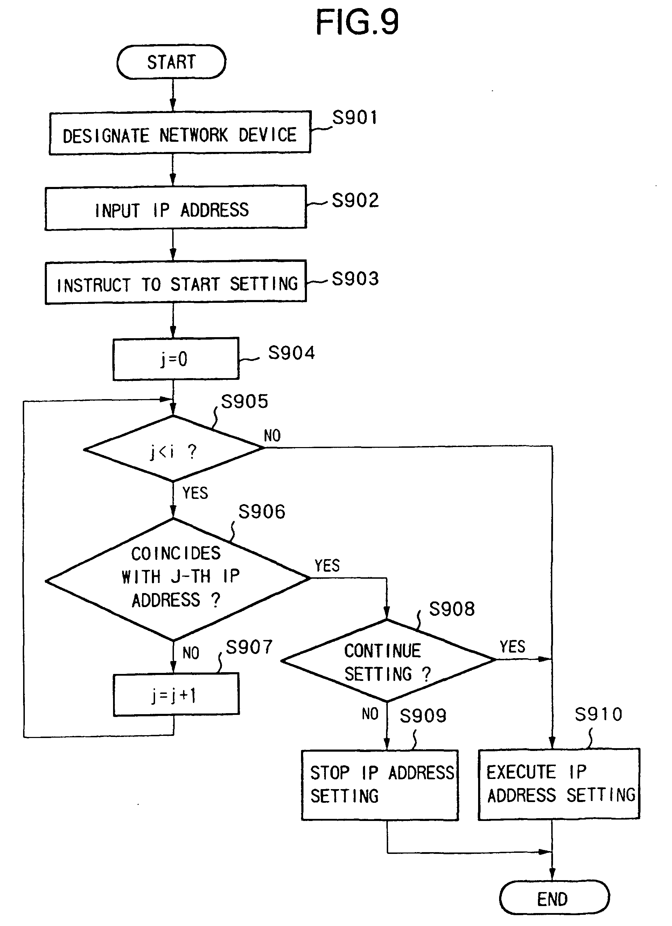

Fig. 9 is a flowchart showing a second IP-address setting processing according to the embodiment, where the NetSpot sets an IP address in the network device (101, 102) connected to the LAN 100 in Fig. 1 when the network device is managed by the personal computer (103, 104 or the like).

In Fig. 9, at step S901, a network device where the IP address is set is designated, and the process proceeds to step S902. The network designated here is that detected in Fig. 7, or may be a device not detected in Fig. 7 (e.g., a network device in initial state where a network protocol is not set). In the former case, generally, a list of devices is displayed as in the device list display window as shown in Fig. 11, and one of the network devices is selected. In the latter case, generally, designation of network device is made by directly designating an MAC address of the network board by using the configurator 603 (Fig. 6).

At step S902, an IP address set in the network device designated at step S901 is inputted, and the process proceeds to step S903. The input of IP address is made by using, e.g., a protocol setting dialog box as shown in Fig. 12 or a UI provided by the configurator 603 (Fig. 6).

At step S903, instruction is made to start processing to set the IP address, inputted at step S902, in the network device designated at step S901, and the process proceeds to step S904. The instruction to start the processing is made by, e.g., depressing the [OK] key or [Update (A)] key in the protocol setting dialog box.

At step S904, a variable j is initialized to "0", and the process proceeds to step S905.

At step S905, the value of the variable j is compared with the value of the variable i (indicative of the number of network devices) in the flowchart in Fig. 7, and if the value of the variable j is less than that of the variable i (YES at step S905), the process proceeds to step S906, otherwise (NO at step S905), proceeds to step S910.

At step S906, the j-th IP address is obtained from the IP addresses of the network devices held at step S704, and the j-th IP address is compared with the IP address inputted at step S901. If the two addresses are equal to each other (YES at step S906), the process proceeds to step S908, while they are not equal (NO at step S906), proceeds to step S907.

At step S907, the value of the variable j is incremented by one, and the process returns to step S905.

At step S908, the user is notified that the IP address inputted at step S902 is already set in another network device, and the user is asked whether or not the IP address setting is to be continued. If the user instructs to continue the IP address setting (YES at step S908), the process proceeds to step S910, otherwise (NO at step S908), the process proceeds to step S909. Note that the inquiry as to the setting is to be continued or not is generally made by using a message box or the like.

At step S909, the IP address setting is prevented, and the process ends.

At step S910, the IP address setting is executed, and the process ends.

The network management software according to the present embodiment may be performed by the PC 500 in the block diagram of Fig. 5 showing the construction of the PC on which the network management software can operate, by a program installed from outside. In such case, the program is provided to the PC 500 by loading a group of information including the program from an external storage medium such as a CD-ROM, a flash memory, or a floppy disk, via electronic-mail or a personal-computer communication network, onto the PC 500.

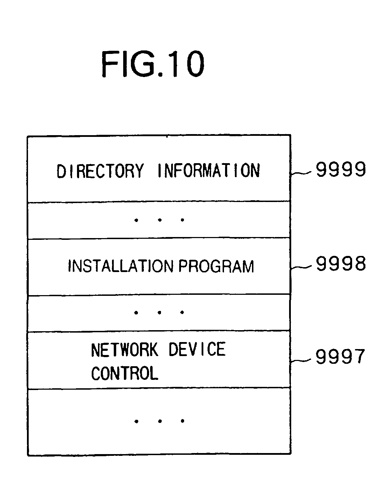

Fig. 10 is a table showing a memory map of a CD-ROM as one example of the storage medium. A numeral 9999 denotes an area in which directory information is stored. The following areas 9998 and 9997 are included in the storage medium.

In the area 9998, an installation program is stored. In the area 9997, the network management software of the present invention is stored. When the network management software is installed into the PC 500, first, the installation program stored in the area 9998 is loaded into the system, and executed by the CPU 501. Next, the installation program executed by the CPU 501 reads the network management software from the area 9997, and stores the read software into the hard disk 511.

The present embodiment can be applied to a system constituted by a plurality of devices (e.g., host computer, interface, reader, printer) or to an apparatus comprising a single device.

Further, an aspect of the present invention can be also achieved by providing a storage medium storing program codes for performing the aforesaid processes to a system or an apparatus, reading the program codes with a computer (e.g., CPU, MPU) of the system or apparatus from the storage medium, then executing the program. In this case, the program codes read from the storage medium realize the novel functions according to the embodiment, and the storage medium storing the program codes constitutes the invention.

Further, the storage medium, such as a floppy disk, a hard disk, an optical disk, a magneto-optical disk, CD-ROM, CD-R, a magnetic tape, a non-volatile type memory card, and a ROM can be used for providing the program codes. Furthermore, besides aforesaid functions according to the above embodiment are realized by executing the program codes which are read by a computer, the present embodiment includes a case where an OS or the like working on the computer performs a part or entire processes in accordance with designations of the program codes and realizes functions according to the above embodiment.

Furthermore, the present embodiment also includes a case where, after the program codes read from the storage medium are written in a function expansion card which is inserted into the computer or in a memory provided in a function expansion unit which is connected to the computer, CPU or the like contained in the function expansion card or unit performs a part or entire process in accordance with designations of the program codes and realizes functions of the above embodiment.

Further, the present embodiment is applicable to a case where a software program is delivered to users requested the program via a communication line for personal-computer communication or the like, from a storage medium where program codes of the software program to realize the functions of the above-described embodiment are stored.

As described above, according to the network device control method and apparatus and storage medium, overlapped IP setting can be prevented by comparing an input IP address with an acquired IP address. This prevents erroneous setting of an IP address which is the same as that already set in another network device, thus solves the problem that an IP address set in a network device is the same as already set in another network device and communication cannot be normally made with the network device after the IP address setting.

Further, when the input IP address coincides with the acquired IP address, the user is asked whether or not the input IP address is set, and if the user instructs not to set the IP address, the IP address setting is prevented, while if the user instructs to continue the IP address setting, the IP address is set. This prevents setting of an IP address the same as that set in another network device, and also allows setting of the IP address temporarily in e.g. IP address renumbering upon addition of network device.

The present invention is not limited to the above embodiments and various changes and modifications can be made within the scope of the present invention.

## Claims

1. A method of operating a peripheral device control apparatus for controlling the setting of IP addresses in peripheral devices connected to the peripheral device control apparatus via a network;
the method steps performed by the peripheral device control apparatus comprising;
a detection step (S702) of detecting peripheral devices connected to the network; and
an address acquisition step (S703) of acquiring IP addresses of the peripheral devices detected in said detection step;
**characterised by** further comprising:
a designation step (S801) of designating from said detected peripheral devices a peripheral device as a control object;
an address input step (S802) of inputting an IP address inputted by a user's operation via a user interface to be set to the peripheral device designated in said designating step;
a comparison step (S806) of comparing the inputted IP address inputted in said address input step, with the acquired IP addresses acquired in said address acquisition step;
a confirmation display step (S908) of displaying a screen used for confirming whether or not to set the inputted IP address to the designated peripheral device in a case where the inputted IP address is equal to one of the acquired IP addresses; and
an address setting confirmation step (S909,S910) of setting the inputted IP address to the designated peripheral device in a case where the continuation of setting the inputted IP address is directed via the screen, and for stopping the setting of the inputted IP address in a case where the stopping of setting the inputted IP address is directed via the screen.

2. The method according to claim 1, further comprising a selection step of selecting a peripheral device where said IP address is not set, wherein based on selection at said selection step, the peripheral device where said IP address is not set is designated as the control object in said designation step.

3. A peripheral device control apparatus for controlling the setting of IP addresses in peripheral devices connected to the peripheral device control apparatus via a network;
the peripheral device control apparatus comprising;
detection means (501) for detecting peripheral devices connected to the network; and
address acquisition means (501) for acquiring IP addresses of the peripheral devices detected by said detection means;
**characterised by** further comprising:
designation means (501) for designating from said detected peripheral devices a peripheral device as a control object;
address input means (501) for inputting an IP address inputted by a user's operation via a user interface to be set to the peripheral device designated by said designating means;
comparison means (501) for comparing the inputted IP address input by said address input means, with the acquired IP addresses acquired by said address acquisition means;
confirmation display means (501,506,510) for displaying a screen used for confirming whether or not to set the inputted IP address to the designated peripheral device in a case where the inputted IP address is equal to one of the acquired IP addresses;
address setting confirmation means (501) for setting the inputted IP address to the designated peripheral device in a case where the continuation of setting the inputted IP address is directed via the screen, and for stopping the setting of the inputted IP address in a case where the stopping of setting the inputted IP address is directed via the screen.

4. The apparatus according to claim 3, wherein said peripheral device as the control object includes a printer.

5. A storage medium containing a program to control a peripheral device control apparatus to perform all of the steps of a method as claimed in any one of claims 1 and 2.

6. A signal encoded with network management software for controlling a peripheral device control apparatus to perform all of the steps of a method as claimed in any one of claims 1 and 2.

## Patentansprüche

1. Verfahren zum Betreiben einer Peripheriegeräte-Steuervorrichtung zur Steuerung der Einstellung von IP-Adressen an Peripheriegeräten, die über ein Netzwerk mit der Peripheriegeräte-Steuervorrichtung verbunden sind;
wobei die von der Peripheriegeräte-Steuervorrichtung durchgeführten Verfahrensschritte aufweisen:
einen Erfassungsschritt (S702) zum Erfassen von mit dem Netzwerk verbundenen Peripheriegeräten; und
einen Adressermittlungsschritt (S703) zum Ermitteln von IP-Adressen der im Erfassungsschritt erfassten Peripheriegeräte;
**gekennzeichnet durch**:
einen Bezeichnungsschritt (S801) zum Bezeichnen eines Peripheriegeräts aus den erfassten Peripheriegeräten als ein Steuerobjekt;
einen Adresseingabeschritt (S802) zum Eingeben einer **durch** eine Benutzerbedienung über eine Benutzerschnittstelle eingegebenen IP-Adresse, die an dem im Bezeichnungsschritt bezeichneten Peripheriegerät einzustellen ist;
einen Vergleichsschritt (S806) zum Vergleichen der eingegebenen IP-Adresse, die im Adresseingabeschritt eingegeben wird, mit den ermittelten IP-Adressen, die im Adressermittlungsschritt ermittelt werden;
einen Bestätigungsanzeigeschritt (S908) zum Anzeigen eines Bildschirms, der zum Bestätigen verwendet wird, ob die eingegebene IP-Adresse an dem bezeichneten Peripheriegerät einzustellen ist oder nicht, in einem Fall, bei dem die eingegebene IP-Adresse gleich einer der ermittelten IP-Adressen ist; und
einen Adresseinstellungsbestätigungsschritt (S909, S910) zum Einstellen der eingegebenen IP-Adresse an dem bezeichneten Peripheriegerät in einem Fall, bei dem über den Bildschirm die Fortsetzung des Einstellens der eingegebenen IP-Adresse angewiesen wird, und zum Beenden der Einstellung der eingegebenen IP-Adresse in einem Fall, bei dem über den Bildschirm die Beendigung des Einstellens der eingegebenen IP-Adresse angewiesen wird.

2. Verfahren gemäß Anspruch 1, zusätzlich mit einem Auswahlschritt zum Auswählen eines Peripheriegeräts, an dem die IP-Adresse nicht eingestellt ist, wobei basierend auf einer Auswahl im Auswahlschritt das Peripheriegerät, an dem die IP-Adresse nicht eingestellt ist, im Bezeichnungsschritt als das Steuerobjekt bezeichnet wird.

3. Peripheriegeräte-Steuervorrichtung zur Steuerung der Einstellung von IP-Adressen an Peripheriegeräten, die über ein Netzwerk mit der Peripheriegeräte-Steuervorrichtung verbunden sind;
wobei die Peripheriegeräte-Steuervorrichtung aufweist:
eine Erfassungseinrichtung (501) zum Erfassen von mit dem Netzwerk verbundenen Peripheriegeräten; und
eine Adressermittlungseinrichtung (501) zum Ermitteln von IP-Adressen der von der Erfassungseinrichtung erfassten Peripheriegeräte;
**gekennzeichnet durch**:
eine Bezeichnungseinrichtung (501) zum Bezeichnen eines Peripheriegerätes aus den erfassten Peripheriegeräten als ein Steuerobjekt;
eine Adresseingabeeinrichtung (501) zum Eingeben einer **durch** eine Benutzerbedienung über eine Benutzerschnittstelle eingegebenen IP-Adresse, die an dem von der Bezeichnungseinrichtung bezeichneten Peripheriegerät einzustellen ist;
eine Vergleichseinrichtung (501) zum Vergleichen der eingegebenen IP-Adresse, die von der Eingabeeinrichtung eingegeben ist, mit den ermittelten IP-Adressen, die von der Adressermittlungseinrichtung ermittelt sind;
eine Bestätigungsanzeigeeinrichtung (501, 506, 510) zum Anzeigen eines Bildschirms, der zum Bestätigen verwendet wird, ob die eingegebene IP-Adresse an dem bezeichneten Peripheriegerät einzustellen ist oder nicht, in einem Fall, bei dem die eingegebene IP-Adresse gleich einer der ermittelten IP-Adressen ist;
eine Adresseinstellungsbestätigungseinrichtung (501) zum Einstellen der eingegebenen IP-Adresse an dem bezeichneten Peripheriegerät in einem Fall, bei dem über den Bildschirm die Fortsetzung des Einstellens der eingegebenen IP-Adresse angewiesen ist, und zum Beenden der Einstellung der eingegebenen IP-Adresse in einem Fall, bei dem über den Bildschirm die Beendigung des Einstellens der eingegebenen IP-Adresse angewiesen ist.

4. Vorrichtung gemäß Anspruch 3, bei der das Peripheriegerät als das Steuerobjekt einen Drucker umfasst.

5. Speichermedium, das ein Programm zum Steuern einer Peripheriegeräte-Steuervorrichtung enthält, um alle der Schritte eines Verfahrens gemäß einem der Ansprüche 1 und 2 durchzuführen.

6. Signal, das mit einer Netzwerkverwaltungssoftware codiert ist, zum Steuern einer Peripheriegeräte-Steuervorrichtung, um alle der Schritte eines Verfahrens gemäß einem der Ansprüche 1 und 2 durchzuführen.

## Revendications

1. Procédé de mise en oeuvre d'un appareil de commande de dispositifs périphériques destiné à commander l'affectation d'adresses d'IP (protocole d'Internet) à des dispositifs périphériques connectés à l'appareil de commande de dispositifs périphériques par l'intermédiaire d'un réseau ;
les étapes de procédé effectuées par l'appareil de commande de dispositifs périphériques comprenant :
une étape (S702) de détection consistant à détecter des dispositifs périphériques connectés au réseau ;
une étape (S703) d'acquisition d'adresses consistant à acquérir des adresses d'IP des dispositifs périphériques détectés à ladite étape de détection ;
**caractérisé en ce qu'**il comprend en outre :
une étape (S801) de désignation consistant à désigner à partir desdits dispositifs périphériques détectés un dispositif périphérique comme objet de commande ;
une étape (S802) d'entrée d'adresse consistant à entrer une adresse d'IP entrée par une opération de l'utilisateur via une interface d'utilisateur pour qu'elle soit affectée au dispositif périphérique désigné à ladite étape de désignation ;
une étape (S806) de comparaison consistant à comparer l'adresse d'IP entrée, entrée à ladite étape d'entrée d'adresse, avec les adresses d'IP acquises, acquises à ladite étape d'acquisition d'adresses ;
une étape (S908) d'affichage de confirmation consistant à afficher un écran utilisé pour confirmer si l'on affecte, ou non, l'adresse d'IP entrée au dispositif périphérique désigné dans le cas où l'adresse d'IP entrée est égale à l'une des adresses d'IP acquises ; et
une étape (S909, S910) de confirmation d'affectation d'adresse consistant à affecter l'adresse d'IP entrée au dispositif périphérique désigné dans le cas où l'on ordonne, par l'intermédiaire de l'écran, de poursuivre l'affectation de l'adresse d'IP entrée, ou à mettre fin à l'affectation de l'adresse d'IP entrée dans le cas où l'on ordonne, par l'intermédiaire de l'écran, de mettre fin à l'affectation de l'adresse d'IP entrée.

2. Procédé selon la revendication 1, comprenant en outre une étape de choix consistant à choisir un dispositif périphérique auquel ladite adresse d'IP n'est pas affectée, dans lequel, en se basant sur le choix à ladite étape de choix, le dispositif périphérique auquel ladite adresse d'IP n'est pas affectée est désigné comme l'objet de commande à ladite étape de désignation.

3. Appareil de commande de dispositifs périphériques destiné à commander l'affectation d'adresses d'IP à des dispositifs périphériques connectés à l'appareil de commande de dispositifs périphériques par l'intermédiaire d'un réseau ;
l'appareil de commande de dispositifs périphériques comprenant :
un moyen (501) de détection destiné à détecter des dispositifs périphériques connectés au réseau ; et
un moyen (501) d'acquisition d'adresses destiné à acquérir des adresses d'IP des dispositifs périphériques détectés par ledit moyen de détection ;
**caractérisé en ce qu'**il comprend en outre :
un moyen (501) de désignation destiné à désigner à partir desdits dispositifs périphériques détectés un dispositif périphérique comme objet de commande ;
un moyen (501) d'entrée d'adresse destiné à entrer une adresse d'IP entrée par une opération de l'utilisateur via une interface d'utilisateur pour qu'elle soit affectée au dispositif périphérique désigné par ledit moyen de désignation ;
un moyen (501) de comparaison destiné à comparer l'adresse d'IP entrée, entrée par ledit moyen d'entrée d'adresse, avec les adresses d'IP acquises, acquises par ledit moyen d'acquisition d'adresses ;
un moyen (501, 506, 510) d'affichage de confirmation destiné à afficher un écran utilisé pour confirmer si l'on affecte, ou non, l'adresse d'IP entrée au dispositif périphérique désigné dans le cas où l'adresse d'IP entrée est égale à l'une des adresses d'IP acquises ; et
un moyen (501) de confirmation d'affectation d'adresse destiné à affecter l'adresse d'IP entrée au dispositif périphérique désigné dans le cas où l'on ordonne, par l'intermédiaire de l'écran, de poursuivre l'affectation de l'adresse d'IP entrée, ou à mettre fin à l'affectation de l'adresse d'IP entrée dans le cas où l'on ordonne, par l'intermédiaire de l'écran, de mettre fin à l'affectation de l'adresse d'IP entrée.

4. Appareil selon la revendication 3, dans lequel ledit dispositif périphérique en tant qu'objet de commande comprend une imprimante.

5. Support de mémorisation contenant un programme propre à commander un appareil de commande de dispositifs périphériques pour effectuer toutes les étapes d'un procédé tel que revendiqué dans l'une quelconque des revendications 1 et 2.

6. Signal codé à l'aide d'un logiciel de gestion de réseau destiné à commander un appareil de commande de dispositifs périphériques pour effectuer toutes les étapes d'un procédé tel que revendiqué dans l'une quelconque des revendications 1 et 2.
